# EUROPEAN PATENT SPECIFICATION

(11) **EP 4 417 848 B1**
(45) Date of publication and mention of the grant of the patent: **04.11.2026**
(21) Application number: 22881079.2
(22) Date of filing: 13.10.2022
(51) Int. Cl.: F16L 15/04, C23C 26/00, C09D 5/00

(54) **OIL-WELL METAL PIPE**
METALLROHR FÜR ÖLBOHRUNGEN
TUYAU MÉTALLIQUE POUR PUITS DE PÉTROLE

(30) Priority: 15.10.2021 JP 2021169257
(43) Date of publication of application: 21.08.2024
(73) Proprietor: NIPPON STEEL CORPORATION, Chiyoda-ku Tokyo 100-8071 (JP); Vallourec Oil and Gas France, 59620 Aulnoye-Aymeries (FR)
(72) Inventor: ABE, Tomoka, Tokyo 100-8071 (JP); TOMIYASU, Ken, Tokyo 100-8071 (JP); MATSUMOTO, Keishi, Tokyo 100-8071 (JP); OCHIAI, Mamoru, Tokyo 103-0004 (JP); IWAKI, Yuichi, Tokyo 103-0004 (JP)
(74) Representative: J A Kemp LLP
(86) International application number: PCT/JP2022/038193
(87) International publication number: WO 2023/063384

(56) References cited:
- WO-A1-2006/058227
- WO-A1-2018/216416
- WO-A2-2008/090411
- CA-A- 733 572
- CN-A- 102 329 553
- CN-A- 103 270 146
- JP-A- 2008 069 883
- JP-A- H03 268 940
- JP-A- S61 117 286

## Description

### TECHNICAL FIELD

The present disclosure relates to a metal pipe, and more particularly relates to an oil-well metal pipe.

### BACKGROUND ART

An oil-well metal pipe is used for drilling in oil fields and natural gas fields (hereinafter, oil fields and natural gas fields are collectively referred to as "oil wells"). An oil-well metal pipe has threaded connections. Specifically, at the oil well drilling site, in accordance with the depth of the oil well, a plurality of threaded connections of oil-well metal pipes are connected to form an oil country tubular goods connected body as typified by a casing pipe or a tubing pipe. An oil country tubular goods connected body is formed by fastening threaded connections to each other. Inspections are sometimes conducted on oil country tubular goods connected bodies. When conducting an inspection, the oil country tubular goods connected body is lifted up and loosened. oil-well metal pipes are then detached from the oil country tubular goods connected body by loosening, and inspected. After the inspection, the threaded connections of the oil-well metal pipes are refastened to each other, and the oil-well metal pipes are reused as a part of the oil country tubular goods connected body.

An oil-well metal pipe includes a pin and a box. The pin has a pin contact surface including an external thread part on an outer peripheral surface of an end portion of the oil-well metal pipe. The box has a box contact surface including an internal thread part on an inner peripheral surface of an end portion of the oil-well metal pipe. In the present description, the external thread part and the internal thread part may also be collectively referred to as "thread parts". Note that, in some cases the pin contact surface may also include a pin unthreaded metal contact portion including a pin sealing surface and a pin shoulder surface. Likewise, in some cases the box contact surface may also include a box unthreaded metal contact portion including a box sealing surface and a box shoulder surface.

The pin contact surface and the box contact surface repeatedly experience strong friction during fastening and loosening of the oil-well metal pipe. Therefore, galling (unrepairable galling) is liable to occur at the pin contact surface and the box contact surface during repeated fastening and loosening. Accordingly, an oil-well metal pipe is required to have sufficient durability with respect to friction, that is, to have excellent galling resistance.

Heretofore, heavy metal powder-containing compound greases, which are referred to as "dopes", have been used to improve the galling resistance of an oil-well metal pipe. Application of a compound grease to the pin contact surface and/or the box contact surface can improve the galling resistance of an oil-well metal pipe. However, heavy metal powder contained in compound greases, such as Pb, Zn and Cu, may affect the environment. For this reason, the development of an oil-well metal pipe that is excellent in galling resistance even without the use of a compound grease is desired.

Technology for enhancing the galling resistance of an oil-well metal pipe is proposed in, for example, Japanese Patent Application Publication No. 2003-021278 (Patent Literature 1) and International Application Publication No. WO2006/104251 (Patent Literature 2).

An oil-well metal pipe disclosed in Patent Literature 1 has a threaded connection for pipes that is constituted by a pin and a box which each have a contact surface including a thread part and an unthreaded metal contact portion. And further, the oil-well metal pipe has a solid lubricant coating composed of a solid lubricant and a binder on the contact surface of at least one of the pin and the box. Moreover, in a cross section in the thickness direction of the solid lubricant coating, an area fraction of secondary particles having an equivalent area diameter within a range of 15 to 60 µm of the solid lubricant is within a range of 5 to 90%. It is described in Patent Literature 1 that by this means an oil-well metal pipe that can stably secure galling resistance and gastightness without applying a compound grease is obtained.

An oil-well metal pipe disclosed in Patent Literature 2 is a threaded connection for pipes that is constituted by a pin and a box which each include a contact surface having a thread part and an unthreaded metal contact portion. And further, a contact surface of at least one member among the pin and the box has a viscous liquid or semisolid lubricant coating, and a dry solid coating that is formed on the lubricant coating. It is described in Patent Literature 2 that by this means an oil-well metal pipe which suppresses the occurrence of rust and exhibits excellent galling resistance and gastightness without using a compound grease is obtained.

JP H03268940 discloses a heat-resistant paint applied to the surface of a metal material. The paint contains a polyether sulfone resin or polyether sulfone resin and fluoroplastic.

WO 2008/090411 discloses coating systems which provide corrosion resistance and, optionally, lubrication, for threaded connections. The compositions comprise a first coating composition comprising polymer matrices of polyimides or epoxies which are modified with small amounts of a fluorine containing polymer. Also present in the coating compositions are corrosion inhibiting agents and inorganic particles having a mean diameter of between approximately 10 nm and 10 µm. Solid lubricants, which may include at least one of PTFE, HDPE, Graphite, and MoS₂, are optionally added to provide the first coating with a low coefficient of friction.
WO 2006/058227 discloses pipes that convey any flowable medium, such as chemicals, food and in particular, oil and gas, and more particularly to a system of pipes having different coatings or linings for the interior and exterior surfaces of such pipes, depending on the environment in which the pipes are used. The pipes may be coated with different materials, which may be of different thicknesses, with various configurations of coatings or linings. Such coating may be done on the interior and/or the exterior of the pipes.

CN 102 329 553 discloses an eccentric wear resisting powder paint of an oil well pipe. The paint comprises the following raw material components by weight percent: 5-60% of epoxy resin, 1-40% of boron modified phenolic resin, 10-20% of silicon micropowder, 1-5% of zinc phosphate, 2-10% of polyether-ether-ketone and 0.01-55% of filler, pigment and a catalyst. The coating has good abrasive resistance and corrosion resistance.

CA 733 572 discloses a novel method for protecting metal members of offshore structures from corrosion.

### CITATION LIST

### PATENT LITERATURE

Patent Literature 1: Japanese Patent Application Publication No. 2003-021278
Patent Literature 2: International Application Publication No. WO2006/104251

### SUMMARY OF INVENTION

### TECHNICAL PROBLEM

In this connection, a vertical wellbore that is drilled vertically and an inclined wellbore that is drilled while being caused to incline are usually employed in drilling for oil and natural gas. On the other hand, horizontal drilling is available as one method of drilling for oil and natural gas. The term "horizontal drilling" refers to a method in which an oil well for which drilling proceeded vertically is gradually curved in the horizontal direction, and eventually is drilled horizontally along the storage reservoir of the oil or natural gas. In comparison to a usual vertical wellbore or inclined wellbore, a horizontal wellbore can contact a greater amount of a storage reservoir of oil or natural gas, and the amount of production of oil or natural gas per unit wellbore increases. In recent years, the use of horizontal drilling for oil and natural gas excavation is increasing. Accordingly, there is a demand for an oil-well metal pipe that can also be used for horizontal drilling.

In horizontal drilling, oil country tubular goods connected body bend when the drilling direction changes from vertical to horizontal. In the case of horizontal drilling, the drilling advances to a deep part of the storage reservoir of oil or natural gas while causing the oil country tubular goods connected body to bend and to rotate in the circumferential direction. Therefore, particularly at a bent section of an oil country tubular goods connected body, torsion is applied to the threaded connections accompanying bending and rotation in the circumferential direction of the oil country tubular goods connected body. If torsion is applied with a high load, oil-well metal pipes are liable to loosen. In a case where the drilling direction is the vertical direction, torsion in the circumferential direction of the oil-well metal pipes is mainly applied to the oil-well metal pipes. However, in the case of horizontal drilling, in addition to torsion in the circumferential direction of the oil-well metal pipes, torsion produced by bending of the oil-well metal pipes is also applied to the oil-well metal pipes. Therefore, in comparison to drilling in the vertical direction, in the case of horizontal drilling the oil-well metal pipes are subjected to the application of additional excessive torsion. Therefore, the oil-well metal pipes are more liable to loosen.

In regard to oil country tubular goods connected body to be used for horizontal drilling, there is a need for an oil-well metal pipe which can be fastened with an even higher torque than heretofore. If an oil-well metal pipe can be fastened with an even higher torque than heretofore, it will be difficult for the threaded connection to loosen. Hence, it will also be difficult for the threaded connection to loosen at a bent section of the oil country tubular goods connected body during horizontal drilling.

An objective of the present disclosure is to provide an oil-well metal pipe that can be fastened with high torque.

### SOLUTION TO PROBLEM

An oil-well metal pipe according to the present disclosure includes:
a pipe main body including a first end portion and a second end portion,
wherein:
   the pipe main body includes:
   a pin formed at the first end portion, and
   a box formed at the second end portion;
   the pin includes:
      a pin contact surface including an external thread part; and
      the box includes:
         a box contact surface including an internal thread part;
         the oil-well metal pipe further including:
            a resin coating on or above at least one of the pin contact surface and the box contact surface,
            the resin coating containing:
               an epoxy resin: 40.0 to 97.0 mass%,
               a magnesium silicate hydroxide powder: 3.0 to 50.0 mass%,
               TiO₂: 0 to 10.0 mass%,
               a wax: 0 to 10.0 mass%,
               a fluorine-based additive: 0 to 20.0 mass%,
               graphite: 0 to 10.0 mass%,
               a rust preventive pigment: 0 to 30.0 mass%,
               a coloring pigment: 0 to 10.0 mass%, and
               a silane coupling agent: 0 to 10.0 mass%,
               and satisfying Formula (1):

                  (C_{W}+C_{F}+C_{G})/(C_{Mg}+C_{TiO2}+C_{Si}) ≤ 0.28 (1)
               where, in Formula (1), a content in mass% of the wax is substituted for Cw, a content in mass% of the fluorine-based additive is substituted for C_{F}, a content in mass% of the graphite is substituted for C_{G}, a content in mass% of the magnesium silicate hydroxide powder is substituted for C_{Mg}, a content in mass% of the TiO₂ is substituted for C_{TiO2}, and a content in mass% of the silane coupling agent is substituted for C_{Si}.

### ADVANTAGEOUS EFFECTS OF INVENTION

The oil-well metal pipe according to the present disclosure can be fastened with high torque.

### BRIEF DESCRIPTION OF DRAWINGS

[FIG. 1] FIG. 1 is a graph illustrating the relation between the coefficient of friction of a resin coating containing an epoxy resin, and yield torque.
[FIG. 2] FIG. 2 is a graph illustrating the relation between the storage modulus of a resin coating containing an epoxy resin, and yield torque.
[FIG. 3] FIG. 3 is a graph illustrating the relation between a ratio (F1) of the total of the content in mass% of a wax, the content in mass% of a fluorine-based additive and the content in mass% of graphite to the total of the content in mass% of a magnesium silicate hydroxide powder and the content of TiO₂ in a resin coating containing an epoxy resin, and the storage modulus of the resin coating.
[FIG. 4] FIG. 4 is a configuration diagram illustrating one example of an oil-well metal pipe according to the present embodiment.
[FIG. 5] FIG. 5 is a partial cross-sectional view illustrating a cross section (longitudinal cross section) parallel to a pipe axis direction of a coupling of the oil-well metal pipe illustrated in FIG.4.
[FIG. 6] FIG. 6 is a cross-sectional view parallel to the pipe axis direction of the oil-well metal pipe illustrated in FIG. 5, that illustrates a portion in the vicinity of a pin of the oil-well metal pipe.
[FIG. 7] FIG. 7 is a cross-sectional view parallel to the pipe axis direction of the oil-well metal pipe illustrated in FIG. 5, that illustrates a portion in the vicinity of a box of the oil-well metal pipe.
[FIG. 8] FIG. 8 is a view illustrating an example of an oil-well metal pipe in which the pin includes an external thread part but does not include a pin sealing surface and a pin shoulder surface, and the box includes an internal thread part but does not include a box sealing surface and a box shoulder surface.
[FIG. 9] FIG. 9 is a configuration diagram illustrating an integral type oil-well metal pipe according to the present embodiment.
[FIG. 10] FIG. 10 is an enlarged view of a pin contact surface illustrated in FIG. 6.
[FIG. 11] FIG. 11 is an enlarged view of a box contact surface illustrated in FIG. 7.

### DESCRIPTION OF EMBODIMENTS

The present embodiment will be described in detail below with reference to the accompanying drawings. The same reference symbols will be used throughout the drawings to refer to the same or like parts, and description thereof will not be repeated.

The present inventors conducted studies regarding an oil-well metal pipe which can be fastened with high torque. As a result, the present inventors obtained the following findings.

Heretofore, a method which increases the coefficient of friction of a resin coating has been proposed as a method for increasing fastening torque. When fastening threaded connections together, if resin coatings that each have a high coefficient of friction come in contact and slide relative to each other, it is expected that the torque when performing fastening will rise. If the torque when performing fastening rises, the yield torque will also rise at the same time. That is, the yield torque can be used as an indicator as to whether or not an oil-well metal pipe can be fastened with high torque. The present inventors included a magnesium silicate hydroxide powder that is a solid powder in a resin coating containing an epoxy resin, adjusted the coefficient of friction of the resin coating, and investigated the relation between the coefficient of friction and the yield torque.

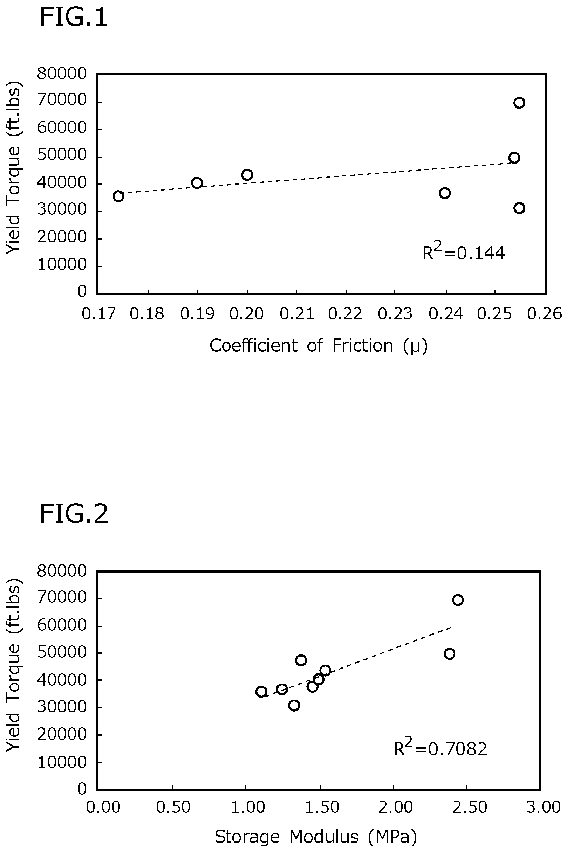

FIG. 1 is a graph illustrating the relation between the coefficient of friction of a resin coating containing an epoxy resin, and the yield torque. The abscissa in FIG. 1 represents the coefficient of friction (µ) of the resin coating containing an epoxy resin. The ordinate in FIG. 1 represents the yield torque (ft. lbs.) in a case where an oil-well metal pipe on which the resin coating containing an epoxy resin was formed was fastened. Here, the term "yield torque" refers to the torque at a time when a threaded connection yields when being fastened. The higher the yield torque is, the higher the torque with which the threaded connection can be fastened will be.

Referring to FIG. 1, a correlation coefficient R² between the coefficient of friction of the resin coating containing an epoxy resin and the yield torque was 0.144. This means that there was almost no correlation between the coefficient of friction of the resin coating containing an epoxy resin and the yield torque. Thus it was found that, contrary to the expectation of the present inventors, the correlation between the coefficient of friction and the yield torque is low. That is, it was found that the yield torque cannot be raised by simply increasing the coefficient of friction of the resin coating.

Therefore, the present inventors conducted further studies with respect to an oil-well metal pipe which can be fastened with high torque. The present inventors focused their attention on the behavior of the resin coating in the final stage of fastening. In the final stage of fastening, one resin coating and another resin coating come in contact with each other with high interfacial pressure and slide. At such time, an external force is applied to each resin coating, and energy which is generated by torsion is also applied thereto. If the resistance of the resin coating to the external force and the energy generated by torsion is high, in the final stage of fastening also, the resin coating will resist the aforementioned external force and energy to try to maintain its shape. It is considered that in this case the torque of the fastening increases. In this regard, the present inventors considered that increasing the dynamic viscoelasticity of the resin coating is effective for increasing the resistance to the external force and the energy generated by torsion.

Dynamic viscoelasticity is separated into a storage modulus and a loss modulus. The term "storage modulus" refers to a component which, of the energy generated in an object by an external force and strain, is stored within the object. The term "loss modulus" refers to a component which, of the energy generated in an object by an external force and strain, is diffused to the outside. The present inventors considered that the storage modulus of a resin coating, and not the loss modulus of a resin coating, influences the yield torque. Therefore, with respect to a resin coating containing an epoxy resin, the present inventors investigated the relation between the storage modulus of a resin coating and the yield torque.

FIG. 2 is a graph illustrating the relation between the storage modulus of a resin coating containing an epoxy resin, and the yield torque. The abscissa in FIG. 2 represents the storage modulus (MPa) of the resin coating containing an epoxy resin. The ordinate in FIG. 2 represents the yield torque (ft. lbs.) in a case where an oil-well metal pipe on which the resin coating containing an epoxy resin was formed was fastened.

Referring to FIG. 2, a correlation coefficient R² between the storage modulus of the resin coating containing an epoxy resin and the yield torque was 0.7082. This means that there is a correlation between the storage modulus of the resin coating containing an epoxy resin and the yield torque. In other words, it was found that the yield torque of the oil-well metal pipe can be raised by increasing the storage modulus of the resin coating.

That is, in contrast to the conventional findings, it was found that the yield torque cannot be raised by simply increasing the coefficient of friction of a resin coating, and that the yield torque can be raised only after increasing the storage modulus of the resin coating.

The present inventors conducted studies regarding a method for increasing the storage modulus of a resin coating containing an epoxy resin. As a result, the present inventors considered that if an epoxy resin is adopted as the base material of a resin coating, and a magnesium silicate hydroxide powder that is a solid powder is contained in the resin coating, the storage modulus of the resin coating will be increased. Therefore, the present inventors prepared various resin coatings containing an epoxy resin in an amount within a range of 40.0 to 97.0 mass%, and also containing magnesium silicate hydroxide in an amount within a range of 3.0 to 50.0 mass%, and investigated the storage modulus of these resin coatings. As a result, the present inventors found that even in the case of resin coatings having the aforementioned components, the storage modulus decreases in some cases. **In** other words, the storage modulus of a resin coating is not increased by merely causing the resin coating to contain a magnesium silicate hydroxide powder.

As the result of further studies regarding a method for increasing the storage modulus of a resin coating containing an epoxy resin, the present inventors found that if the components satisfy the following Formula (1), the storage modulus of the resin coating can be increased: $\left({C}_{W}+{C}_{F}+{C}_{G}\right) / \left({C}_{Mg}+{C}_{TiO 2}+{C}_{Si}\right) \leq 0.28$ (1) where, in Formula (1), a content in mass% of the wax is substituted for Cw, a content in mass% of the fluorine-based additive is substituted for C_{F}, a content in mass% of the graphite is substituted for C_{G}, a content in mass% of the magnesium silicate hydroxide powder is substituted for C_{Mg}, a content in mass% of the TiO₂ is substituted for C_{TiO2}, and a content in mass% of the silane coupling agent is substituted for C_{Si}.

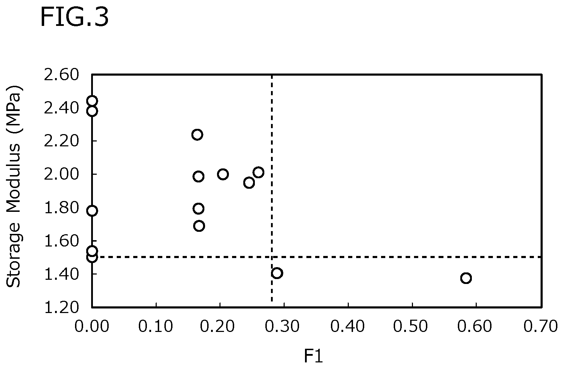

Here, it is defined that (C_{W}+C_{F}+C_{G})/(C_{Mg}+C_{TiO2}+C_{Si}) = F1. FIG. 3 is a graph illustrating the relation between F1 in a resin coating containing an epoxy resin, and the storage modulus of the resin coating. FIG. 3 is an extract of one part of the results of examples which are described later. The abscissa in FIG. 3 represents F1. The ordinate in FIG. 3 represents the storage modulus (MPa) of the resin coating.

Referring to FIG. 3, if F1 is 0.28 or less, the storage modulus of the resin coating becomes 1.50 MPa or more. Although the reason for this is not certain, the present inventors surmise that the reason is as follows. An epoxy resin has a moderate hardness, and also contains therein a large amount of oxygen (O) or hydrogen (H). Further, in the case of a magnesium silicate hydroxide powder and TiO₂, hydroxyl groups and metals such as magnesium or titanium are exposed on the surface of the powder, and thus the surface of the powder has polarity. Therefore, a hydroxyl group or a metal on the surface of the magnesium silicate hydroxide powder and TiO₂ forms a hydrogen bond with oxygen (O) or hydrogen (H) contained in epoxy resin. By this means, the storage modulus of the resin coating increases. Further, a silane coupling agent has an alkoxysilyl group and an organic reactive group. The alkoxysilyl group and the organic reactive group each chemically bond with epoxy resin. Therefore, the silane coupling agent causes cross-linking of epoxy resins. By this means, the storage modulus of the resin coating increases.

A wax, a fluorine-based additive and graphite do not contain a large amount of polar moieties such as oxygen (O), and hence the adhesiveness thereof to epoxy resin is weak. Therefore, if a magnesium silicate hydroxide powder, TiO₂ and a silane coupling agent are excessively included relative to a wax, a fluorine-based additive and graphite, the storage modulus of the resin coating will increase. Specifically, a ratio of the total of the content in mass% of a wax, the content in mass% of a fluorine-based additive and the content in mass% of graphite to the total of the content in mass% of a magnesium silicate hydroxide powder, the content in mass% of TiO₂, and the content in mass% of a silane coupling agent is made 0.28 or less. By this means, the storage modulus of the resin coating increases.

As described above, in contrast to the conventional findings, it was found that the yield torque cannot be raised by simply increasing the coefficient of friction of the resin coating, and that the yield torque can be raised only by increasing the storage modulus of the resin coating. Further, it was found that the storage modulus of the resin coating is increased only by adjusting the content of each component in the resin coating so as to satisfy the aforementioned Formula (1). By raising the yield torque by increasing the storage modulus of the resin coating, an oil-well metal pipe that can also be used for horizontal drilling is obtained. The oil-well metal pipe of the present disclosure was completed based on the above findings, and has the following structure.
[1] An oil-well metal pipe, including:
   a pipe main body including a first end portion and a second end portion,
   wherein:
      the pipe main body includes:
      a pin formed at the first end portion, and
      a box formed at the second end portion;
      the pin includes:
         a pin contact surface including an external thread part; and
         the box includes:
            a box contact surface including an internal thread part;
            the oil-well metal pipe further including:
               a resin coating on or above at least one of the pin contact surface and the box contact surface,
               the resin coating containing:
                  an epoxy resin: 40.0 to 97.0 mass%,
                  a magnesium silicate hydroxide powder: 3.0 to 50.0 mass%,
                  TiO₂: 0 to 10.0 mass%,
                  a wax: 0 to 10.0 mass%,
                  a fluorine-based additive: 0 to 20.0 mass%,
                  graphite: 0 to 10.0 mass%,
                  a rust preventive pigment: 0 to 30.0 mass%,
                  a coloring pigment: 0 to 10.0 mass%, and
                  a silane coupling agent: 0 to 10.0 mass%,
                  and satisfying Formula (1): $\left({C}_{W}+{C}_{F}+{C}_{G}\right) / \left({C}_{Mg}+{C}_{TiO 2}+{C}_{Si}\right) \leq 0.28$ (1)
                  where, in Formula (1), a content in mass% of the wax is substituted for Cw, a content in mass% of the fluorine-based additive is substituted for C_{F}, a content in mass% of the graphite is substituted for C_{G}, a content in mass% of the magnesium silicate hydroxide powder is substituted for C_{Mg}, a content in mass% of the TiO₂ is substituted for C_{TiO2}, and a content in mass% of the silane coupling agent is substituted for C_{Si}.
[2] The oil-well metal pipe according to [1], wherein:
   the pin contact surface further includes a pin sealing surface and a pin shoulder surface, and
   the box contact surface further includes a box sealing surface and a box shoulder surface.

Hereunder, the oil-well metal pipe according to the present embodiment will be described in detail.

### [Structure of Oil-Well Metal Pipe]

First, the structure of the oil-well metal pipe of the present embodiment will be described. The oil-well metal pipe has a well-known structure. The available types of oil-well metal pipe are a T&C type oil-well metal pipe and an integral type oil-well metal pipe. Hereunder, each type of oil-well metal pipe will be described in detail.

### [Case where Oil-Well Metal Pipe 1 is T&C type]

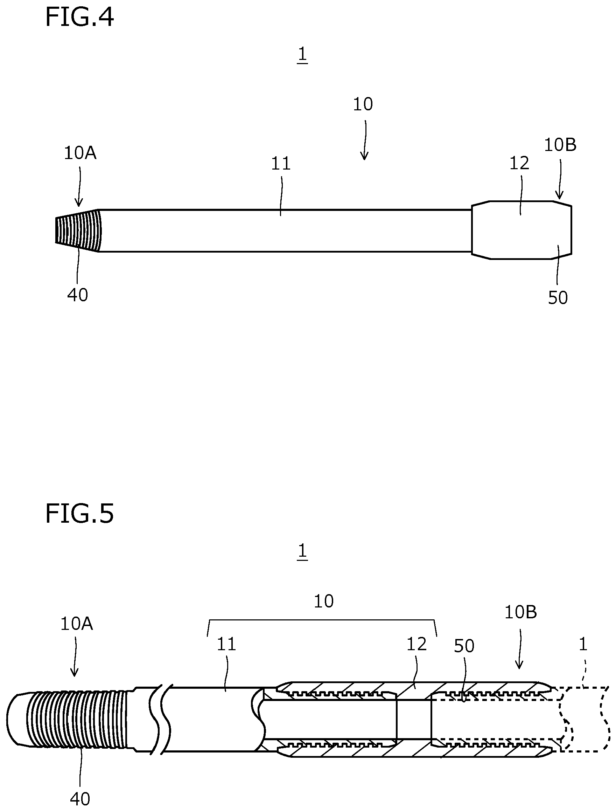

FIG. 4 is a configuration diagram illustrating one example of an oil-well metal pipe 1 according to the present embodiment. FIG. 4 is a configuration diagram illustrating the oil-well metal pipe 1 of a so-called T&C (threaded and coupled) type. Referring to FIG. 4, the oil-well metal pipe 1 includes a pipe main body 10.

The pipe main body 10 extends in the pipe axis direction. A cross section perpendicular to the pipe axis direction of the pipe main body 10 is a circular shape. The pipe main body 10 includes a first end portion 10A and a second end portion 10B. The first end portion 10A is an end portion on the opposite side to the second end portion 10B. In the T&C type oil-well metal pipe 1 illustrated in FIG. 4, the pipe main body 10 includes a pin tube body 11 and a coupling 12. The coupling 12 is attached to one end of the pin tube body 11. More specifically, the coupling 12 is fastened by threading to one end of the pin tube body 11.

FIG. 5 is a partial cross-sectional view illustrating a cross section (longitudinal cross section) that is parallel to the pipe axis direction of the coupling 12 of the oil-well metal pipe 1 illustrated in FIG. 4. Referring to FIG. 4 and FIG. 5, the pipe main body 10 includes a pin 40 and a box 50. The pin 40 is formed at the first end portion 10A of the pipe main body 10. When performing fastening, the pin 40 is inserted into the box 50 of another oil-well metal pipe 1 (not illustrated), and is fastened by threading to the box 50 of the other oil-well metal pipe 1.

The box 50 is formed at the second end portion 10B of the pipe main body 10. When performing fastening, the pin 40 of another oil-well metal pipe 1 is inserted into the box 50, and the box 50 is fastened by threading to the pin 40 of the other oil-well metal pipe 1.

### [Regarding structure of pin 40]

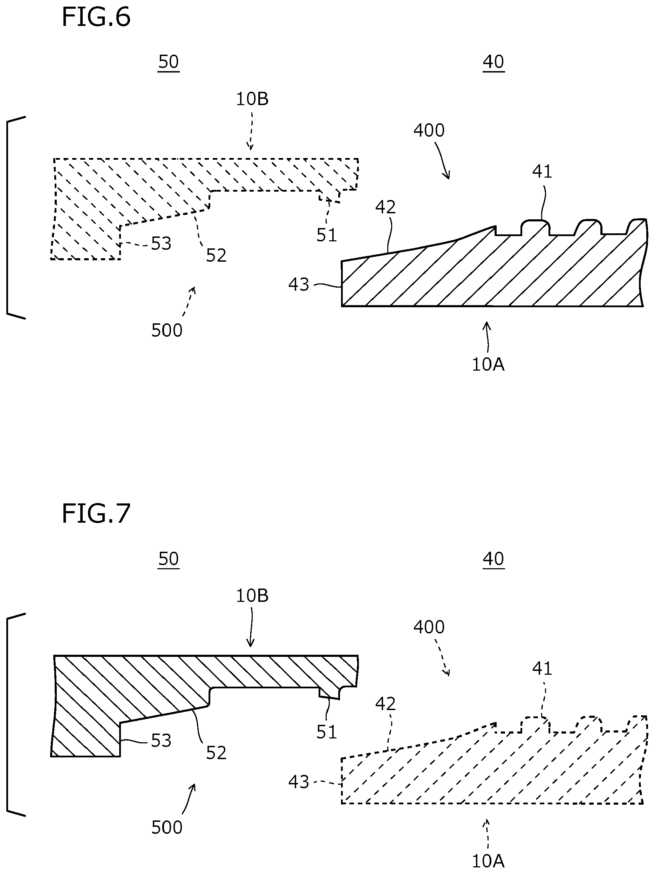

FIG. 6 is a cross-sectional view of a portion in the vicinity of the pin 40 of the oil-well metal pipe 1 illustrated in FIG. 5, that is a cross-sectional view parallel to the pipe axis direction of the oil-well metal pipe 1. A dashed line portion in FIG. 6 represents the structure of the box 50 of another oil-well metal pipe in the case of fastening the oil-well metal pipe 1 to another oil-well metal pipe 1. Referring to FIG. 6, the pin 40 includes a pin contact surface 400 on the outer peripheral surface of the first end portion 10A of the pipe main body 10. When fastening to the other oil-well metal pipe 1, the pin contact surface 400 is screwed into the box 50 of the other oil-well metal pipe 1 and contacts a box contact surface 500 (described later) of the box 50.

The pin contact surface 400 includes at least an external thread part 41 formed in the outer peripheral surface of the first end portion 10A. The pin contact surface 400 may further include a pin sealing surface 42 and a pin shoulder surface 43. In FIG. 6, the pin shoulder surface 43 is disposed at the front end face of the first end portion 10A, and on the outer peripheral surface of the first end portion 10A, the pin sealing surface 42 is disposed further on the front end side of the first end portion 10A than the external thread part 41. In other words, the pin sealing surface 42 is disposed between the external thread part 41 and the pin shoulder surface 43. The pin sealing surface 42 is provided in a tapered shape. Specifically, the external diameter of the pin sealing surface 42 gradually decreases from the external thread part 41 toward the pin shoulder surface 43 in the longitudinal direction (pipe axis direction) of the first end portion 10A.

When performing fastening with another oil-well metal pipe 1, the pin sealing surface 42 contacts a box sealing surface 52 (described later) of the box 50 of the other oil-well metal pipe 1. More specifically, during fastening, when the pin 40 is inserted into the box 50 of the other oil-well metal pipe 1, the pin sealing surface 42 contacts the box sealing surface 52. Subsequently, when the pin 40 is screwed further into the box 50 of the other oil-well metal pipe 1, the pin sealing surface 42 closely contacts the box sealing surface 52. By this means, during fastening, the pin sealing surface 42 closely contacts the box sealing surface 52 to thereby form a seal that is based on metal-to-metal contact. Therefore, the gastightness can be increased in each of the oil-well metal pipes 1 that are fastened to each other.

In FIG. 6, the pin shoulder surface 43 is disposed at the front end face of the first end portion 10A. In other words, in the pin 40 illustrated in FIG. 6, the external thread part 41, the pin sealing surface 42 and the pin shoulder surface 43 are disposed sequentially in that order from the center of the pipe main body 10 toward the first end portion 10A. During fastening to the other oil-well metal pipe 1, the pin shoulder surface 43 opposes and contacts a box shoulder surface 53 (described later) of the box 50 of the other oil-well metal pipe 1. More specifically, during fastening, the pin shoulder surface 43 contacts the box shoulder surface 53 as a result of the pin 40 being inserted into the box 50 of the other oil-well metal pipe 1. By this means, during fastening, a high torque can be obtained. Further, the positional relation between the pin 40 and the box 50 in the fastening state can be stabilized.

Note that, the pin contact surface 400 of the pin 40 includes at least the external thread part 41. In other words, the pin contact surface 400 includes the external thread part 41, and need not include the pin sealing surface 42 and the pin shoulder surface 43. The pin contact surface 400 may include the external thread part 41 and the pin shoulder surface 43, and need not include the pin sealing surface 42. The pin contact surface 400 may include the external thread part 41 and the pin sealing surface 42, and need not include the pin shoulder surface 43.

### [Regarding structure of box 50]

FIG. 7 is a cross-sectional view of a portion in the vicinity of the box 50 of the oil-well metal pipe 1 illustrated in FIG. 5, that is a cross-sectional view parallel to the pipe axis direction of the oil-well metal pipe 1. A dashed line portion in FIG. 7 represents the structure of the pin 40 of another oil-well metal pipe 1 in the case of fastening the oil-well metal pipe 1 to another oil-well metal pipe 1. Referring to FIG. 7, the box 50 includes a box contact surface 500 on the inner peripheral surface of the second end portion 10B of the pipe main body 10. When performing fastening to another oil-well metal pipe 1, the box contact surface 500 contacts the pin contact surface 400 of the pin 40 of the other oil-well metal pipe 1 when the pin 40 is screwed into the box 50.

The box contact surface 500 includes at least an internal thread part 51 formed in the inner peripheral surface of the second end portion 10B. When performing fastening, the internal thread part 51 engages with the external thread part 41 of the pin 40 of the other oil-well metal pipe 1.

The box contact surface 500 may further include the box sealing surface 52 and the box shoulder surface 53. In FIG. 7, on the inner peripheral surface of the second end portion 10B, the box sealing surface 52 is disposed further on the pipe main body 10 side than the internal thread part 51. In other words, the box sealing surface 52 is disposed between the internal thread part 51 and the box shoulder surface 53. The box sealing surface 52 is provided in a tapered shape. Specifically, the internal diameter of the box sealing surface 52 gradually decreases from the internal thread part 51 toward the box shoulder surface 53 in the longitudinal direction (pipe axis direction) of the second end portion 10B.

When performing fastening to another oil-well metal pipe 1, the box sealing surface 52 contacts the pin sealing surface 42 of the pin 40 of the other oil-well metal pipe 1. More specifically, during fastening, when the pin 40 of the other oil-well metal pipe 1 is screwed into the box 50, the box sealing surface 52 contacts the pin sealing surface 42, and when the pin 40 is screwed in further, the box sealing surface 52 closely contacts the pin sealing surface 42. By this means, during fastening, the box sealing surface 52 closely contacts the pin sealing surface 42 to thereby form a seal that is based on metal-to-metal contact. Therefore, the gastightness can be increased in each of the oil-well metal pipes 1 that are fastened to each other.

The box shoulder surface 53 is disposed further on the pipe main body 10 side than the box sealing surface 52. In other words, in the box 50, the box shoulder surface 53, the box sealing surface 52 and the internal thread part 51 are disposed sequentially in that order from the center of the pipe main body 10 toward the front end of the second end portion 10B. When performing fastening to another oil-well metal pipe 1, the box shoulder surface 53 opposes and contacts the pin shoulder surface 43 of the pin 40 of the other oil-well metal pipe 1. More specifically, during fastening, the box shoulder surface 53 contacts the pin shoulder surface 43 as a result of the pin 40 of the other oil-well metal pipe 1 being inserted into the box 50. By this means, during fastening, a high torque can be obtained. Further, the positional relation between the pin 40 and the box 50 in the fastening state can be stabilized.

The box contact surface 500 includes at least the internal thread part 51. When performing fastening, the internal thread part 51 of the box contact surface 500 of the box 50 contacts the external thread part 41 of the pin contact surface 400 of the pin 40 in a manner such that the internal thread part 51 corresponds to the external thread part 41. The box sealing surface 52 contacts the pin sealing surface 42 in a manner such that the box sealing surface 52 corresponds to the pin sealing surface 42. The box shoulder surface 53 contacts the pin shoulder surface 43 in a manner such that the box shoulder surface 53 corresponds to the pin shoulder surface 43.

In a case where the pin contact surface 400 includes the external thread part 41 and does not include the pin sealing surface 42 and the pin shoulder surface 43, the box contact surface 500 includes the internal thread part 51 and does not include the box sealing surface 52 and the box shoulder surface 53. In a case where the pin contact surface 400 includes the external thread part 41 and the pin shoulder surface 43 and does not include the pin sealing surface 42, the box contact surface 500 includes the internal thread part 51 and the box shoulder surface 53 and does not include the box sealing surface 52. In a case where the pin contact surface 400 includes the external thread part 41 and the pin sealing surface 42 and does not include the pin shoulder surface 43, the box contact surface 500 includes the internal thread part 51 and the box sealing surface 52 and does not include the box shoulder surface 53.

The pin contact surface 400 may include a plurality of the external thread parts 41, may include a plurality of the pin sealing surfaces 42, and may include a plurality of the pin shoulder surfaces 43. For example, the pin shoulder surface 43, the pin sealing surface 42, the external thread part 41, the pin sealing surface 42, the pin shoulder surface 43, the pin sealing surface 42 and the external thread part 41 may be disposed in that order on the pin contact surface 400 of the pin 40 in the direction from the front end of the first end portion 10A toward the center of the pipe main body 10. In such case, the internal thread part 51, the box sealing surface 52, the box shoulder surface 53, the box sealing surface 52, the internal thread part 51, the box sealing surface 52 and the box shoulder surface 53 are disposed in that order on the box contact surface 500 of the box 50 in the direction from the front end of the second end portion 10B toward the center of the pipe main body 10.

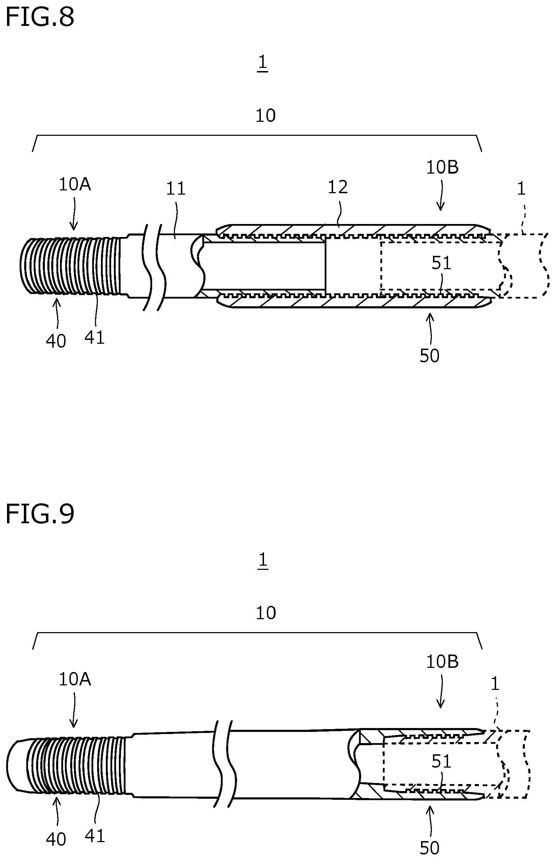

In FIG. 6 and FIG. 7 a so-called "premium joint" is illustrated in which the pin 40 includes the external thread part 41, the pin sealing surface 42 and the pin shoulder surface 43, and the box 50 includes the internal thread part 51, the box sealing surface 52 and the box shoulder surface 53. However, as described above, the pin 40 may include the external thread part 41 and need not include the pin sealing surface 42 and the pin shoulder surface 43. In this case, the box 50 includes the internal thread part 51 and does not include the box sealing surface 52 and the box shoulder surface 53. FIG. 8 is a view illustrating one example of the oil-well metal pipe 1 in which the pin 40 includes the external thread part 41 and does not include the pin sealing surface 42 and the pin shoulder surface 43, and the box 50 includes the internal thread part 51 and does not include the box sealing surface 52 and the box shoulder surface 53.

### [Case where oil-well metal pipe 1 is integral type]

The oil-well metal pipe 1 illustrated in FIG. 4, FIG. 5 and FIG. 8 is a so-called "T&C type" oil-well metal pipe 1, in which the pipe main body 10 includes the pin tube body 11 and the coupling 12. However, the oil-well metal pipe 1 according to the present embodiment may be an integral type instead of a T&C type.

FIG. 9 is a configuration diagram of an integral type oil-well metal pipe 1 according to the present embodiment. Referring to FIG. 9, the integral type oil-well metal pipe 1 includes a pipe main body 10. The pipe main body 10 includes a first end portion 10A and a second end portion 10B. The first end portion 10A is disposed on the opposite side to the second end portion 10B. As described above, in the T&C type oil-well metal pipe 1, the pipe main body 10 includes the pin tube body 11 and the coupling 12. In other words, in the T&C type oil-well metal pipe 1, the pipe main body 10 is constituted by fastening two separate members (the pin tube body 11 and the coupling 12). In contrast, in the integral type oil-well metal pipe 1, the pipe main body 10 is formed in an integral manner.

The pin 40 is formed at the first end portion 10A of the pipe main body 10. When performing fastening, the pin 40 is inserted in and screwed into the box 50 of another integral type oil-well metal pipe 1, and thereby fastened to the box 50 of the other integral type oil-well metal pipe 1. The box 50 is formed at the second end portion 10B of the pipe main body 10. When performing fastening, the pin 40 of another integral type the oil-well metal pipe 1 is inserted in and screwed into the box 50, to thereby fasten the box 50 to the pin 40 of the other integral type oil-well metal pipe 1.

The structure of the pin 40 of the integral type oil-well metal pipe 1 is the same as the structure of the pin 40 of the T&C type oil-well metal pipe 1 illustrated in FIG. 6. Similarly, the structure of the box 50 of the integral type oil-well metal pipe 1 is the same as the structure of the box 50 of the T&C type oil-well metal pipe 1 illustrated in FIG. 7. Note that, in FIG. 6 and FIG. 7, the pin shoulder surface 43, the pin sealing surface 42 and the external thread part 41 in the pin 40 are disposed in that order from the front end of the first end portion 10A toward the center of the pipe main body 10. Therefore, the internal thread part 51, the box sealing surface 52 and the box shoulder surface 53 in the box 50 are disposed in that order from the front end of the second end portion 10B toward the center of the pipe main body 10. However, similarly to the pin contact surface 400 of the pin 40 of the T&C type oil-well metal pipe 1, it suffices that the pin contact surface 400 of the pin 40 of the integral type oil-well metal pipe 1 includes at least the external thread part 41. Further, similarly to the box contact surface 500 of the box 50 of the T&C type oil-well metal pipe 1, it suffices that the box contact surface 500 of the box 50 of the integral type oil-well metal pipe 1 includes at least the internal thread part 51.

In short, the oil-well metal pipe 1 of the present embodiment may be a T&C type or may be an integral type.

### [Resin coating]

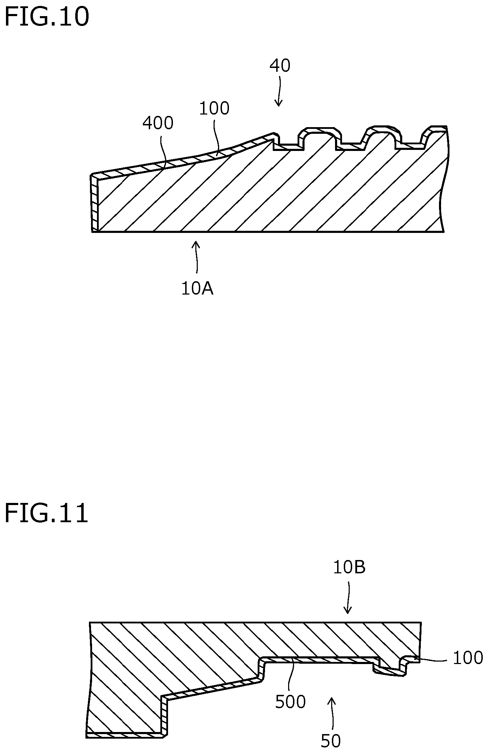

The oil-well metal pipe 1 of the present embodiment includes a resin coating 100 on or above at least one of the pin contact surface 400 and the box contact surface 500. FIG. 10 is an enlarged view of the pin contact surface 400 illustrated in FIG. 6. FIG. 11 is an enlarged view of the box contact surface 500 illustrated in FIG. 7. As illustrated in FIG. 10 and FIG. 11, the oil-well metal pipe 1 according to the present embodiment may include the resin coating 100 on or above both the pin contact surface 400 and the box contact surface 500. However, a configuration may also be adopted in which the oil-well metal pipe 1 according to the present embodiment includes the resin coating 100 on or above only one surface among the pin contact surface 400 and the box contact surface 500. For example, in a case where the resin coating 100 is provided on or above the pin contact surface 400 as illustrated in FIG. 10, the resin coating 100 need not be provided on or above the box contact surface 500. Further, in a case where the resin coating 100 is provided on or above the box contact surface 500 as illustrated in FIG. 11, the resin coating need not be provided on the pin contact surface 400. In other words, the oil-well metal pipe 1 according to the present embodiment includes the resin coating 100 on or above the pin contact surface 400 and/or on or above the box contact surface 500.

### [Components of resin coating]

The resin coating 100 has the following components.

### Epoxy resin: 40.0 to 97.0 mass%

An epoxy resin is the base material of the resin coating 100. Here, the term "base material" refers to the component that is contained in the largest amount in the resin coating 100. An epoxy resin has a moderate hardness, and also contains a large amount of oxygen (O) or hydrogen (H) therein. Therefore, the epoxy resin easily forms a hydrogen bond with a hydroxyl group or metals such as magnesium and titanium which are exposed on the surface of a magnesium silicate hydroxide powder and TiO₂. The epoxy resin also chemically bonds with a silane coupling agent. If the content of the epoxy resin is less than 40.0 mass%, the hardness of the resin coating 100 will decrease, and the resin coating 100 will be liable to peel off when fastening and loosening are repeated. On the other hand, if the content of the epoxy resin is more than 97.0 mass%, a sufficient amount of other components, including a magnesium silicate hydroxide powder, cannot be sufficiently contained, and consequently there is a possibility that the galling resistance and the yield torque of the oil-well metal pipe 1 may decrease. Accordingly, the content of the epoxy resin is within a range of 40.0 to 97.0 mass%. A preferable lower limit of the content of the epoxy resin is 43.0 mass%, more preferably is 45.0 mass%, and further preferably is 50.0 mass%. A preferable upper limit of the content of the epoxy resin is 95.0 mass%, more preferably is 90.0 mass%, and further preferably is 89.0 mass%.

### Magnesium silicate hydroxide powder: 3.0 to 50.0 mass%

A magnesium silicate hydroxide powder increases the storage modulus of the resin coating 100. A hydroxyl group and a polar group containing magnesium are exposed on the surface of the magnesium silicate hydroxide powder. Therefore, the magnesium silicate hydroxide powder easily forms hydrogen bonds with oxygen (O) or hydrogen (H) within the epoxy resin. It is considered that by the magnesium silicate hydroxide powder forming hydrogen bonds inside the epoxy resin, the storage modulus of the resin coating 100 increases. If the content of the magnesium silicate hydroxide powder is less than 3.0 mass%, the aforementioned effect is not obtained. On the other hand, if the content of the magnesium silicate hydroxide powder is more than 50.0 mass%, defects will occur in the formation of the resin coating 100. Therefore, the content of the magnesium silicate hydroxide powder is within a range of 3.0 to 50.0 mass%. A preferable lower limit of the content of the magnesium silicate hydroxide powder is 5.0 mass%, more preferably is 7.0 mass%, and further preferably is 10.0 mass%. A preferable upper limit of the content of the magnesium silicate hydroxide powder is 45.0 mass%, more preferably is 40.0 mass%, and further preferably is 35.0 mass%.

### TiO₂: 0 to 10.0 mass%

TiO₂ is a component that is optionally contained, and it need not be contained. When contained, TiO₂ increases the storage modulus of the resin coating 100. TiO₂ is a powder. A hydroxyl group and a polar group containing titanium are exposed on the surface of the TiO₂ powder. Therefore, the TiO₂ easily forms hydrogen bonds with oxygen (O) or hydrogen (H) within the epoxy resin. It is considered that by the TiO₂ forming hydrogen bonds inside the epoxy resin, the storage modulus of the resin coating 100 increases. However, if the content of TiO₂ is more than 10.0 mass%, the TiO₂ will promote abrasive wear, and may cause the galling resistance of the oil-well metal pipe 1 to decrease. Therefore, the content of TiO₂ is within a range of 0 to 10.0 mass%. When TiO₂ is to be contained, a preferable lower limit of the content of TiO₂ is 0.1 mass%, more preferably is 0.2 mass%, and further preferably is 0.5 mass%. When TiO₂ is to be contained, a preferable upper limit of the content of TiO₂ is 5.0 mass%, more preferably is 4.0 mass%, and further preferably is 3.0 mass%.

### Wax: 0 to 10.0 mass%

Wax is a component that is optionally contained, and it need not be contained. When contained, wax increases the lubricity of the resin coating 100. However, if the content of wax is more than 10.0 mass%, the hardness of the resin coating 100 will decrease, and the resin coating 100 will be liable to peel off when fastening and loosening are repeated. Therefore, the content of wax is within a range of 0 to 10.0 mass%. When wax is to be contained, a preferable lower limit of the content of wax is 1.0 mass%, more preferably is 2.0 mass%, and further preferably is 3.0 mass%. When wax is to be contained, a preferable upper limit of the content of wax is 9.0 mass%, more preferably is 8.0 mass%, and further preferably is 5.0 mass%.

The wax is, for example, one or more types selected from a group consisting of animal waxes, vegetable waxes, mineral waxes, and synthetic waxes. More specifically, the wax is one or more types selected from a group consisting of bees wax, spermaceti wax (the foregoing are animal waxes), Japan wax, carnauba wax, candelilla wax and rice wax (the foregoing are vegetable waxes), paraffin wax, microcrystalline wax, petrolatum, montan wax, ozocerite and ceresin (the foregoing are mineral waxes), oxidized wax, polyethylene wax, polypropylene wax, Fischer-Tropsch wax, amide wax and hydrogenated castor oil (castor wax) (the foregoing are synthetic waxes). More preferably, the wax is one or more types selected from the group consisting of polyethylene wax and polypropylene wax. The resin coating 100 may contain a plurality of types of wax. In a case where the resin coating 100 contains a plurality of types of wax, the term "content of wax" means the total content of the plurality of types of wax.

### Fluorine-based additive: 0 to 20.0 mass%

A fluorine-based additive is a component that is optionally contained, and it need not be contained. When contained, the fluorine-based additive increases the lubricity of the resin coating 100. However, if the content of the fluorine-based additive is more than 20.0 mass%, the hardness of the resin coating 100 will decrease, and the resin coating 100 will be liable to peel off when fastening and loosening are repeated. Therefore, the content of the fluorine-based additive is within a range of 0 to 20.0 mass%. When a fluorine-based additive is to be contained, a preferable lower limit of the content of the fluorine-based additive is 1.0 mass%, more preferably is 5.0 mass%, and further preferably is 8.0 mass%. When a fluorine-based additive is to be contained, a preferable upper limit of the content of the fluorine-based additive is 18.0 mass%, more preferably is 15.0 mass%, and further preferably is 10.0 mass%.

The term "fluorine-based additive" is a generic term for additives containing fluorine. The fluorine-based additive is, for example, one or more types selected from the group consisting of perfluoropolyether (PFPE) and polytetrafluoroethylene (PTFE). The resin coating 100 may contain a plurality of types of fluorine-based additive. In a case where the resin coating 100 contains a plurality of types of fluorine-based additive, the term "content of the fluorine-based additive" means the total content of the plurality of types of fluorine-based additive.

### Graphite: 0 to 10.0 mass%

Graphite is a component that is optionally contained, and it need not be contained. When contained, graphite increases the lubricity of the resin coating 100. However, if the content of graphite is more than 10.0 mass%, the hardness of the resin coating 100 will decrease, and the resin coating 100 will be liable to peel off when fastening and loosening are repeated. Therefore, the content of graphite is within a range of 0 to 10.0 mass%. When graphite is to be contained, a preferable lower limit of the content of graphite is 1.0 mass%, more preferably is 3.0 mass%, and further preferably is 5.0 mass%. When graphite is to be contained, a preferable upper limit of the content of graphite is 9.0 mass%, more preferably is 8.0 mass%, and further preferably is 7.0 mass%.

### Rust preventive pigment: 0 to 30.0 mass%

A rust preventive pigment is a component that is optionally contained, and it need not be contained. When contained, the rust preventive pigment increases the anti-rust properties of the resin coating 100. However, if the content of the rust preventive pigment is more than 30.0 mass%, defects will occur in the formation of the resin coating 100. Therefore, the content of the rust preventive pigment is within a range of 0 to 30.0 mass%. When a rust preventive pigment is to be contained, a preferable lower limit of the content of the rust preventive pigment is 1.0 mass%, more preferably is 2.0 mass%, and further preferably is 4.0 mass%. When a rust preventive pigment is to be contained, a preferable upper limit of the content of the rust preventive pigment is 25.0 mass%, more preferably is 20.0 mass%, and further preferably is 10.0 mass%.

The rust preventive pigment is not particularly limited as long as it is a well-known pigment that increases the anti-rust properties of the resin coating 100. The rust preventive pigment is, for example, one or more types selected from a group consisting of zinc phosphate, aluminum tripolyphosphate, aluminum phosphite, a metal soap of a carboxylic acid, and a sulfonate. The resin coating 100 may contain a plurality of types of rust preventive pigment. **In** a case where the resin coating 100 contains a plurality of types of rust preventive pigment, the term "content of the rust preventive pigment" means the total content of the plurality of types of rust preventive pigment.

### Coloring pigment: 0 to 10.0 mass%

A coloring pigment is a component that is optionally contained, and it need not be contained. When contained, the coloring pigment colors the resin coating 100 and facilitates visual recognition of damage to the resin coating 100. However, if the content of the coloring pigment is more than 10.0 mass%, defects will occur in the formation of the resin coating 100. Therefore, the content of the coloring pigment is within a range of 0 to 10.0 mass%. When a coloring pigment is to be contained, a preferable lower limit of the content of the coloring pigment is 0.1 mass%, more preferably is 0.2 mass%, and further preferably is 0.5 mass%. When a coloring pigment is to be contained, a preferable upper limit of the coloring pigment is 8.0 mass%, more preferably is 5.0 mass%, and further preferably is 3.0 mass%.

The coloring pigment is not particularly limited as long as it is a well-known pigment which can color the resin coating 100. The coloring pigment is, for example, one or more types selected from a group consisting of copper phthalocyanine, zinc oxide, carbon black, yellow iron oxide, iron oxide, and chromium hydroxide. The resin coating 100 may contain a plurality of types of coloring pigment. In a case where the resin coating 100 contains a plurality of types of coloring pigment, the term "content of the coloring pigment" means the total content of the plurality of types of coloring pigment.

### Silane coupling agent: 0 to 10.0 mass%

A silane coupling agent is a component that is optionally contained, and it need not be contained. When contained, the silane coupling agent increases the adhesiveness of the resin coating 100. By this means, during repeated fastening and loosening of the oil-well metal pipe 1, the silane coupling agent suppresses delamination of the resin coating 100. The silane coupling agent also causes cross-linking of epoxy resin and thereby increases the storage modulus of the resin coating 100. However, if the content of the silane coupling agent is more than 10.0 mass%, defects will occur in the formation of the resin coating 100. Therefore, the content of the silane coupling agent is within a range of 0 to 10.0 mass%. When a silane coupling agent is to be contained, a preferable lower limit of the content of the silane coupling agent is 0.1 mass%, more preferably is 0.2 mass%, and further preferably is 0.5 mass%. When a silane coupling agent is to be contained, a preferable upper limit of the content of the silane coupling agent is 8.0 mass%, more preferably is 6.0 mass%, and further preferably is 4.0 mass%.

### Other components: 0 to 10.0 mass%

Other components are components that are optionally contained, and these components need not be contained. The term "other components" refers to, for example, one or more types selected from the group consisting of an antiseptic agent and an antioxidant agent. When other components are contained, the content of the other components is 10.0 mass% or less in total. That is, the content of the other components is within a range of 0 to 10.0 mass% in total.

The resin coating 100 may be a resin coating 100 consisting of: an epoxy resin: 40.0 to 97.0 mass%, a magnesium silicate hydroxide powder: 3.0 to 50.0 mass%, TiO₂: 0 to 10.0 mass%, a wax: 0 to 10.0 mass%, a fluorine-based additive: 0 to 20.0 mass%, graphite: 0 to 10.0 mass%, a rust preventive pigment: 0 to 30.0 mass%, a coloring pigment: 0 to 10.0 mass%, a silane coupling agent: 0 to 10.0 mass% and other components: 0 to 10.0 mass%.

### [Formula (1)]

The resin coating 100 satisfies Formula (1): $\left({C}_{W}+{C}_{F}+{C}_{G}\right) / \left({C}_{Mg}+{C}_{TiO 2}+{C}_{Si}\right) \leq 0.28$ (1) where, in Formula (1), a content in mass% of the wax is substituted for Cw, a content in mass% of the fluorine-based additive is substituted for C_{F}, a content in mass% of the graphite is substituted for C_{G}, a content in mass% of the magnesium silicate hydroxide powder is substituted for C_{Mg}, a content in mass% of the TiO₂ is substituted for C_{TiO2}, and a content in mass% of the silane coupling agent is substituted for C_{Si}.

Here, it is defined that (C_{W}+C_{F}+C_{G})/(C_{Mg}+C_{TiO2}+C_{Si}) = F1. If F1 is more than 0.28, the content of the wax, fluorine-based additive and graphite for which it is difficult to form hydrogen bonds with the epoxy resin will be too large relative to the content of the magnesium silicate hydroxide powder and TiO₂ which easily form hydrogen bonds with the epoxy resin and also relative to the content of the silane coupling agent that causes cross-linking of epoxy resin. In such a case, the storage modulus of the resin coating 100 will decrease. Therefore, F1 ≤ 0.28. The upper limit of F1 is preferably 0.25, more preferably is 0.20, further preferably is 0.15, and more preferably is 0.10. F1 may be 0.

By the components of the resin coating 100 satisfying Formula (1), the storage modulus of the resin coating 100 increases. As a result, the yield torque of the oil-well metal pipe 1 that includes the resin coating 100 rises.

### [Storage modulus of resin coating]

Whilst the storage modulus of the resin coating 100 is not particularly limited, the higher the storage modulus is, the more preferable it is. If the storage modulus of the resin coating 100 is 1.50 MPa or more, the yield torque of the oil-well metal pipe 1 that includes the resin coating 100 can be markedly raised. Therefore, the storage modulus of the resin coating 100 is preferably 1.50 MPa or more. The lower limit of the storage modulus of the resin coating 100 is more preferably 1.55 MPa, further preferably is 1.70 MPa, and more preferably is 2.00 MPa. Whilst the upper limit of the storage modulus of the resin coating 100 is not particularly limited, for example, the upper limit is 10.00 MPa.

### [Method for measuring storage modulus]

The storage modulus of the resin coating 100 is measured by the following method. The composition for forming the resin coating 100 is clamped between a heating plate and a geometry of a rotary rheometer. The storage modulus at a time when the geometry is rotated at a constant speed in one direction is measured. The test specimen is set in the rotary rheometer at room temperature, heated rapidly to 210°C, and the storage modulus when the test specimen has been held for 20 minutes at 210°C is measured. The measurement conditions are as follows: measurement temperature: 210°C; timing at which to measure storage modulus: when 20 minutes has passed after the start of the measurement; frequency: 1Hz; environment: under nitrogen gas.

### [Thickness of resin coating]

The thickness of the resin coating 100 is not particularly limited. The thickness of the resin coating 100 is, for example, 1 to 100 µm. **In** this case, the yield torque of the oil-well metal pipe 1 can be more stably increased. The lower limit of the thickness of the resin coating 100 is preferably 2 µm, more preferably is 5 µm, and further preferably is 10 µm. The upper limit of the thickness of the resin coating 100 is preferably 50 µm, more preferably is 40 µm, and further preferably is 30 µm.

### [Method for measuring thickness of resin coating]

The thickness of the resin coating 100 is measured by the following method. A probe of an electromagnetic induction type film thickness measuring instrument is brought into contact with the pin contact surface 400 or the box contact surface 500 on which the resin coating 100 is formed. The probe has an electromagnet, and when a magnetic body is brought close to it, electromagnetic induction occurs, and its voltage changes depending on the distance between the probe and the magnetic body. The thickness of the resin coating 100 is determined from the change in voltage amount. The measurement locations are twelve locations (twelve locations that are at 0°, 30°, 60°, 90°, 120°, 150°, 180°, 210°, 240°, 270°, 300° and 330°) in the tube circumferential direction of the oil-well metal pipe 1. The arithmetic mean of the measurement results of the twelve locations is taken to be the thickness of the resin coating 100.

### [Chemical composition of pipe main body]

Chemical composition of the pipe main body 10 of the oil-well metal pipe 1 according to the present embodiment is not particularly limited. Accordingly, the kind of steel of the pipe main body 10 of the oil-well metal pipe 1 is not particularly limited. The pipe main body 10 may be formed of, for example, carbon steel, stainless steel, alloy steel or the like. Accordingly, the oil-well metal pipe 1 may be a steel pipe made of Fe-based alloy or an alloy pipe represented by a Ni-based alloy pipe. Here, the steel pipe is, for example, a low-alloy steel pipe, a martensitic stainless steel pipe, and a duplex stainless steel pipe. Among alloy steels, high alloy steels such as a Ni-based alloy and duplex stainless steels that contain alloying elements such as Cr, Ni and Mo have high corrosion resistance. Therefore by using these high alloy steels as the pipe main body 10, excellent corrosion resistance is obtained in a corrosive environment that contains hydrogen sulfide or carbon dioxide or the like.

### [Production method]

A method for producing the oil-well metal pipe 1 according to the present embodiment will be described hereunder.

The method for producing the oil-well metal pipe 1 according to the present embodiment includes a preparation process, an application process, and a hardening process. The hardening process is performed after the application process.

### [Preparation process]

In the preparation process, the oil-well metal pipe 1 having the pipe main body 10 that includes the pin 40 including the pin contact surface 400 that includes the external thread part 41, and the box 50 including the box contact surface 500 that includes the internal thread part 51 is prepared. As described above, the oil-well metal pipe 1 according to the present embodiment has a well-known structure. In other words, in the preparation process it suffices to prepare the oil-well metal pipe 1 that has a well-known structure.

### [Application process]

In the application process, a composition is applied onto at least one of the pin contact surface 400 and the box contact surface 500. The composition is a composition for forming the aforementioned resin coating 100. The composition contains epoxy resin: 40.0 to 97.0 mass%, a magnesium silicate hydroxide powder: 3.0 to 50.0 mass%, TiO₂: 0 to 10.0 mass%, a wax: 0 to 10.0 mass%, a fluorine-based additive: 0 to 20.0 mass%, graphite: 0 to 10.0 mass%, a rust preventive pigment: 0 to 30.0 mass%, a coloring pigment: 0 to 10.0 mass%, and a silane coupling agent: 0 to 10.0 mass%, and satisfies Formula (1). The composition also contains a solvent. The composition for forming the resin coating 100 is the same as the composition of the resin coating 100 described above, excluding a solvent.

The composition can be produced, for example, by melting or dispersing the epoxy resin, the magnesium silicate hydroxide powder and, as necessary, other components in the solvent and mixing them. The solvent is, for example, one or more types selected from the group consisting of water, alcohol and an organic solvent. The solvent may contain a small amount of a surfactant. The proportion of the solvent is not particularly limited. It suffices to adjust the proportion of the solvent to an appropriate viscosity according to the application method. The proportion of the solvent is, for example, within a range of 40 to 60 mass% when taking the total of all components other than the solvent as 100 mass%.

The method of applying the composition on the pin contact surface 400 and/or the box contact surface 500 is not particularly limited, and a well-known method may be used. For example, the composition in solution form is applied on the pin contact surface 400 and/or the box contact surface 500 by spray coating. **In** this case, the viscosity of the composition is to be adjusted so that it can be applied by spray coating in an environment at normal temperature and normal pressure. Another application method, such as brushing or dipping may be employed as the method for applying the composition on the pin contact surface 400 and/or the box contact surface 500, instead of spray application.

### [Hardening process]

In the hardening process, the applied composition is hardened to form the resin coating 100. By heating the composition that was applied onto at least one of the pin contact surface 400 and the box contact surface 500, the composition is subjected to thermal curing and the solid resin coating 100 is formed. The heating method is not particularly limited, and a well-known method may be used. The heating method is, for example, a method in which the oil-well metal pipe 1 on which the composition has been applied is inserted into a well-known heating furnace and heated. The heating temperature is, for example, 200 to 250°C, and the heating time is, for example, 5 to 30 minutes.

The oil-well metal pipe 1 according to the present embodiment is produced by the above processes.

### [Preconditioning treatment process]

The method for producing the oil-well metal pipe 1 according to the present embodiment may further include a preconditioning treatment process prior to the application process. In the preconditioning treatment process, for example, one or more types of treatment selected from the group consisting of a pickling treatment, a blasting treatment and an alkaline degreasing treatment is performed.

In the case of performing a pickling treatment, for example, the pin contact surface 400 and/or the box contact surface 500 is immersed in a strongly acidic solution such as sulfuric acid, hydrochloric acid, nitric acid, hydrofluoric acid or a mixture of these acids, to thereby increase the surface roughness of the pin contact surface 400 and/or the box contact surface 500. In the case of performing a blasting treatment, for example, sand blasting is performed in which a blast material (an abrasive) is mixed with compressed air, and the mixture is propelled onto the pin contact surface 400 and/or the box contact surface 500. In this case, the surface roughness of the pin contact surface 400 and/or the box contact surface 500 increases.

Note that, with respect to preconditioning treatment process, the pin contact surface 400 and the box contact surface 500 may be subjected to the same processes or may be subjected to different processes to each other. Further, the preconditioning treatment process may be performed only on the pin contact surface 400, or may be performed only on the box contact surface 500.

The oil-well metal pipe 1 according to the present embodiment is produced by the above processes. However, the production method described above is one example of a method for producing the oil-well metal pipe 1 according to the present embodiment, and the present embodiment is not limited to the production method described above. The oil-well metal pipe 1 according to the present embodiment may also be produced by another method.

### [Example]

The advantageous effects of the oil-well metal pipe of the present embodiment are described more specifically hereunder by way of examples. The conditions adopted in the following examples are one example of conditions which are employed for confirming the workability and advantageous effects of the oil-well metal pipe of the present embodiment. Accordingly, the oil-well metal pipe of the present embodiment is not limited to this one example of the conditions.

In the examples, compositions for forming resin coatings were prepared, and the storage modulus of the respective resin coatings was evaluated. The specific details are described in the following.

### [Storage modulus evaluation test]

Compositions having the components shown in Table 1 were prepared. Each composition contained a solvent in addition to the components described in Table 1. A mixed solution of water, alcohol and a surfactant was used as the solvent. Each composition was applied onto a heating plate of a rotary rheometer (manufactured by Anton Parr Japan K. K., model number MCR302). The composition was clamped between the heating plate and the geometry, and the storage modulus when the geometry was rotated at a constant speed in one direction was measured. The test specimen was set in the rotary rheometer at room temperature, heated rapidly to 210°C, and the storage modulus when the test specimen had been held for 20 minutes at 210°C was measured. The following measurement conditions were adopted: measurement temperature: 210°C; timing at which to measure storage modulus: after 20 minutes passed after the start of the measurement; frequency: 1Hz; environment: under nitrogen gas. Note that, the respective compositions were applied so that the thickness of each resin coating was within the range of 30 to 40 µm.

### [Table 1]

**TABLE 1**

| Test Number | Resin Coating Composition | | | | | | | | | | Evaluation Result |
|---|---|---|---|---|---|---|---|---|---|---|---|
| | Epoxy Resin (mass%) | Magnesium Silicate Hydroxide Powder (mass%) | TiO₂ (mass%) | Wax (mass%) | Fluorine-Based Additive (mass%) | Graphite (mass%) | Rust Preventive Pigment (mass%) | Coloring Pigment (mass%) | Silane Coupling Agent (mass%) | F1 | Storage Modulus (MPa) |
| 1 | 89.9 | 0.0 | 1.4 | 0.0 | 0.0 | 0.0 | 7.6 | 1.1 | 0.0 | 0.00 | 1.25 |
| 2 | 57.0 | 0.0 | 0.0 | 0.0 | 12.0 | 0.0 | 22.0 | 9.0 | 0.0 | - | 1.11 |
| 3 | 77.6 | 2.4 | 0.0 | 0.0 | 12.0 | 0.0 | 7.0 | 1.0 | 0.0 | 5.00 | 1.33 |
| 4 | 85.6 | 3.4 | 0.0 | 0.0 | 0.0 | 0.0 | 7.0 | 1.0 | 3.0 | 0.00 | 1.78 |
| 5 | 77.1 | 14.6 | 0.0 | 0.0 | 0.0 | 0.0 | 4.9 | 1.0 | 2.4 | 0.00 | 2.44 |
| 6 | 77.1 | 19.5 | 0.0 | 0.0 | 0.0 | 0.0 | 0.0 | 1.0 | 2.4 | 0.00 | 2.38 |
| 7 | 48.6 | 39.0 | 1.4 | 0.0 | 0.0 | 0.0 | 7.5 | 1.0 | 2.5 | 0.00 | 1.50 |
| 8 | 49.8 | 40.0 | 1.4 | 0.0 | 0.0 | 0.0 | 7.7 | 1.1 | 0.0 | 0.00 | 1.54 |
| 9 | 84.4 | 2.4 | 0.0 | 4.9 | 0.0 | 0.0 | 7.3 | 1.0 | 0.0 | 2.04 | 1.45 |
| 10 | 67.5 | 14.7 | 0.0 | 9.8 | 0.0 | 0.0 | 4.9 | 1.0 | 2.1 | 0.58 | 1.38 |
| 11 | 72.3 | 14.7 | 0.0 | 4.9 | 0.0 | 0.0 | 4.9 | 1.0 | 2.2 | 0.29 | 1.41 |
| 12 | 73.1 | 15.0 | 0.0 | 3.0 | 0.0 | 0.0 | 4.9 | 1.0 | 3.0 | 0.17 | 1.80 |
| 13 | 73.1 | 15.0 | 0.0 | 0.0 | 3.0 | 0.0 | 4.9 | 1.0 | 3.0 | 0.17 | 1.69 |
| 14 | 73.1 | 15.0 | 0.0 | 0.0 | 0.0 | 3.0 | 4.9 | 1.0 | 3.0 | 0.17 | 1.99 |
| 15 | 65.1 | 20.0 | 0.0 | 3.0 | 3.0 | 0.0 | 4.9 | 1.0 | 3.0 | 0.26 | 2.01 |
| 16 | 65.7 | 20.0 | 1.4 | 0.0 | 2.0 | 2.0 | 4.9 | 1.0 | 3.0 | 0.16 | 2.24 |
| 17 | 64.7 | 20.0 | 1.4 | 3.0 | 0.0 | 2.0 | 4.9 | 1.0 | 3.0 | 0.20 | 2.00 |
| 18 | 63.7 | 20.0 | 1.4 | 2.0 | 2.0 | 2.0 | 4.9 | 1.0 | 3.0 | 0.25 | 1.95 |
| 19 | 41.1 | 6.0 | 0.0 | 32.0 | 8.0 | 7.0 | 4.9 | 1.0 | 0.0 | 7.83 | 1.34 |
| 20 | 93.6 | 2.4 | 0.0 | 0.0 | 0.0 | 0.0 | 0.0 | 1.0 | 3.0 | 0.00 | 1.30 |

### [Evaluation results]

Referring to Table 1, with respect to the resin coatings of Test Numbers 4 to 8 and 12 to 18, the content of each component was appropriate, and the composition satisfied Formula (1). Therefore, the storage modulus was 1.50 MPa or more. The resin coating of each of Test Numbers 4 to 8 and 12 to 18 was able to raise the yield torque of the oil-well metal pipe.

On the other hand, in the resin coatings of Test Numbers 1 and 2, the magnesium silicate hydroxide was not contained. Consequently, the storage modulus was less than 1.50 MPa. Therefore, the respective resin coatings of Test Numbers 1 and 2 could not raise the yield torque of the oil-well metal pipe.

In the resin coatings of Test Numbers 3 and 9, the content of the magnesium silicate hydroxide powder was too low. Moreover, the composition did not satisfy Formula (1). Consequently, the storage modulus was less than 1.50 MPa. Therefore, the respective resin coatings of Test Numbers 3 and 9 could not raise the yield torque of the oil-well metal pipe.

In the resin coatings of Test Numbers 10 and 11, although the content of each component was appropriate, the composition did not satisfy Formula (1). Consequently, the storage modulus was less than 1.50 MPa. Therefore, the respective resin coatings of Test Numbers 10 and 11 could not raise the yield torque of the oil-well metal pipe.

In the resin coating of Test Number 19, the content of wax was too large, and further, the composition did not satisfy Formula (1). Consequently, the storage modulus was less than 1.50 MPa. Therefore, the resin coating of Test Number 19 could not raise the yield torque of the oil-well metal pipe.

In the resin coating of Test Number 20, the content of a magnesium silicate hydroxide powder was too small. Consequently, the storage modulus was less than 1.50 MPa. Therefore, the resin coating of Test Number 20 could not raise the yield torque of the oil-well metal pipe.

An embodiment of the present disclosure has been described above. However, the foregoing embodiment is merely an example for implementing the present disclosure. Accordingly, the present disclosure is not limited to the above embodiment, and the above embodiment can be appropriately modified within a range which does not deviate from the gist of the present disclosure.

### REFERENCE SIGNS LIST

- 1: Oil-well metal pipe
- 10: Pipe Main Body
- 10A: First End Portion
- 10B: Second End Portion
- 11: Pin Tube Body
- 12: Coupling
- 40: Pin
- 41: External Thread Part
- 42: Pin Sealing Surface
- 43: Pin Shoulder Surface
- 50: Box
- 51: Internal Thread Part
- 52: Box Sealing Surface
- 53: Box Shoulder Surface
- 100: Resin Coating
- 400: Pin Contact Surface
- 500: Box Contact Surface

## Claims

1. An oil-well metal pipe (1), comprising:
a pipe main body (10) including a first end portion (10A) and a second end portion (10B);
wherein:
the pipe main body (10) includes:
a pin (40) formed at the first end portion (10A), and
a box (50) formed at the second end portion (10B);
the pin (40) includes:
a pin contact surface (400) including an external thread part (41);
the box (50) includes:
a box contact surface (500) including an internal thread part (51);
the oil-well metal pipe (1) further comprising:
a resin coating (100) on or above at least one of the pin contact surface (400) and the box contact surface (500),
the resin coating (100) containing:
an epoxy resin: 40.0 to 97.0 mass%,
a magnesium silicate hydroxide powder: 3.0 to 50.0 mass%,
TiO₂: 0 to 10.0 mass%,
a wax: 0 to 10.0 mass%,
a fluorine-based additive: 0 to 20.0 mass%,
graphite: 0 to 10.0 mass%,
a rust preventive pigment: 0 to 30.0 mass%,
a coloring pigment: 0 to 10.0 mass%, and
a silane coupling agent: 0 to 10.0 mass%,
and satisfying Formula (1): $\left({C}_{W}+{C}_{F}+{C}_{G}\right) / \left({C}_{Mg}+{C}_{TiO 2}+{C}_{Si}\right) \leq 0.28$ (1)
where, in Formula (1), a content in mass% of the wax is substituted for C_{W}, a content in mass% of the fluorine-based additive is substituted for C_{F}, a content in mass% of the graphite is substituted for C_{G}, a content in mass% of the magnesium silicate hydroxide powder is substituted for C_{Mg}, a content in mass% of the TiO₂ is substituted for C_{TiO2}, and a content in mass% of the silane coupling agent is substituted for C_{Si}.

2. The oil-well metal pipe (1) according to claim 1, wherein:
the pin contact surface (400) further includes a pin sealing surface (42) and a pin shoulder surface (43), and
the box contact surface (500) further includes a box sealing surface (52) and a box shoulder surface (53).

## Patentansprüche

1. Metallrohr (1) für Ölbohrlöcher, das umfasst:
einen Rohrhauptkörper (10) mit einem ersten Endabschnitt (10A) und einem zweiten Endabschnitt (10B),
wobei:
der Rohrhauptkörper (10) enthält:
einen am ersten Endabschnitt (10A) gebildeten Stift (40), und
ein am zweiten Endabschnitt (10B) gebildetes Gehäuse (50);
der Stift (40) enthält:
eine Stiftkontaktfläche (400) mit einem Außengewindeabschnitt (41);
das Gehäuse (50) enthält:
eine Gehäusekontaktfläche (500) mit einem Innengewindeabschnitt (51);
wobei das Metallrohr (1) für Ölbohrlöcher ferner umfasst:
eine Harzbeschichtung (100) auf oder über mindestens einer der Stiftkontaktflächen (400) und der Gehäusekontaktflächen (500),
wobei die Harzbeschichtung (100) enthält:
ein Epoxidharz: 40,0 bis 97,0 Massen-%,
ein Magnesiumsilikathydroxidpulver: 3,0 bis 50,0 Massen-%,
TiO₂: 0 bis 10,0 Massen-%,
ein Wachs: 0 bis 10,0 Massen-%,
ein Additiv auf Fluorbasis: 0 bis 20,0 Massen-%,
Graphit: 0 bis 10,0 Massen-%,
ein Rostschutzpigment: 0 bis 30,0 Massen-%,
ein Farbpigment: 0 bis 10,0 Massen-% und
ein Silan-Haftvermittler: 0 bis 10,0 Massen-%,
wobei dies folgende Formel (1) erfüllt: $\left({C}_{W}+{C}_{F}+{C}_{G}\right) / \left({C}_{Mg}+{C}_{TiO 2}+{C}_{Si}\right) \leq 0.28$ (1)
wobei in Formel (1) C_{W} durch den Gehalt in Massen-% des Wachses ersetzt wird, C_{W} durch den Gehalt in Massen-% des Additivs auf Fluorbasis ersetzt wird, C_{G} durch den Gehalt in Massen-% des Graphits ersetzt wird, C_{Mg} durch den Gehalt in Massen-% des Magnesiumsilikathydroxid-Pulvers ersetzt wird, C_{TiO2} durch den Gehalt in Massen-% des TiO₂ ersetzt wird und C_{Si} durch den Gehalt in Massen-% des Silan-Haftvermittlers ersetzt wird.

2. Metallrohr (1) für Ölbohrlöcher nach Anspruch 1, wobei:
die Stiftkontaktfläche (400) ferner eine Stiftdichtfläche (42) und eine Stiftschulterfläche (43) enthält, und
die Gehäusekontaktfläche (500) ferner eine Gehäusedichtfläche (52) und eine Gehäuseschulterfläche (53) enthält.

## Revendications

1. Tuyau en métal pour puits de pétrole (1), comprenant :
un corps principal de tuyau (10) comprenant une première portion d'extrémité (10A) et une deuxième portion d'extrémité (10B) ;
dans lequel :
le corps principal de tuyau (10) comprend :
une partie mâle (40) formée au niveau de la première portion d'extrémité (10A), et
une partie femelle (50) formée au niveau de la deuxième portion d'extrémité (10B) ;
la partie mâle (40) comprend :
une surface de contact mâle (400) comprenant une partie filetée externe (41) ;
la partie femelle (50) comprend :
une surface de contact femelle (500) comprenant une partie filetée interne (51) ;
le tuyau en métal pour puits de pétrole (1) comprenant en outre :
un revêtement en résine (100) sur ou au-dessus de la surface de contact mâle (400) et/ou de la surface de contact femelle (500),
le revêtement en résine (100) contenant :
une résine époxy : 40,0 à 97,0 % en masse,
une poudre d'hydroxyde de silicate de magnésium : 3,0 à 50,0 % en masse,
TiO₂ : 0 à 10,0 % en masse,
une cire : 0 à 10,0 % en masse,
un additif à base de fluor : 0 à 20,0 % en masse,
du graphite : 0 à 10,0 % en masse,
un pigment antirouille : 0 à 30,0 % en masse,
un pigment colorant : 0 à 10,0 % en masse, et
un agent de couplage au silane : 0 à 10,0 % en masse,
et satisfaisant à la formule (1) : $\left({C}_{W}+{C}_{F}+{C}_{G}\right) / \left({C}_{Mg}+{C}_{TiO 2}+{C}_{si}\right) \leq 0 , 28$ (1)
où, dans la formule (1), une teneur en % en masse de la cire est substituée par C_{w}, une teneur en % en masse de l'additif à base de fluor est substituée par C_{F}, une teneur en % en masse du graphite est substituée par C_{G}, une teneur en % en masse de la poudre d'hydroxyde de silicate de magnésium est substituée par C_{Mg}, une teneur en % en masse de TiO₂ est substituée par C_{TiO2}, et une teneur en % en masse de l'agent de couplage au silane est substituée par C_{Si}.

2. Tuyau en métal pour puits de pétrole (1) selon la revendication 1, dans lequel :
la surface de contact mâle (400) comprend en outre une surface d'étanchéité mâle (42) et une surface de butée mâle (43), et
la surface de contact femelle (500) comprend en outre une surface d'étanchéité femelle (52) et une surface de butée femelle (53).
